# EUROPÄISCHE PATENTSCHRIFT

(11) **EP 1 177 753 B1**
(45) Veröffentlichungstag und Bekanntmachung des Hinweises auf die Patenterteilung: **19.10.2005**
(21) Anmeldenummer: 01118353.0
(22) Anmeldetag: 27.07.2001
(51) Int. Cl.: A47J 27/21

(54) **Haushaltsgerät mit einem bewegbaren Deckel**
Household appliance with a movable lid
Appareil ménager avec un couvercle mobile

(30) Priorität: 04.08.2000 DE 10038137
(43) Veröffentlichungstag der Anmeldung: 06.02.2002
(73) Patentinhaber: BSH Bosch und Siemens Hausgeräte GmbH, 81739 München (DE)
(72) Erfinder: Obermaier, Markus, 83365 Nussdorf (DE); Magg, Johannes, 83368 St. Georgen (DE); Kramer, Siegmund, 83417 Kirchanschöring (DE)

(56) Entgegenhaltungen:
- DE-A- 19 517 623
- DE-A- 19 730 831
- DE-U- 29 513 127
- GB-A- 2 327 333

## Beschreibung

Die Erfindung betrifft ein Haushaltsgerät mit einer Halterung für einen bewegbaren Deckel gemäß dem Oberbegriff des Patentanspruchs 1.

Eine Vielzahl von Haushaltsgeräten weisen Deckel auf, mit denen beispielsweise ein Wasserbehälter abgedeckt werden kann. Bei Wasserkochern werden Deckel über eine Mechanik wie z. B. einem Schieber in einer Schließposition festgehalten. Nach dem Entriegeln des Schiebers, wird der Deckel durch eine Feder in eine Offenposition bewegt.

In der DE 295 13 127 U1 ist ein Wasserkocher mit einem Gehäuse und einem bewegbaren Deckel offenbart. Der Deckel ist über eine Drehhalterung an dem Gehäuse drehbar gelagert. Eine Zugfeder ist zwischen Gehäuse und Deckel eingespannt und spannt den Deckel in einer vorgegebenen Lage vor.

Die Aufgabe der Erfindung besteht darin, eine vereinfachte Halterung für einen Deckel bereitzustellen, die ohne zusätzliche Mechanik wie z. B. einem Schieber, auskommt.

Die Aufgabe der Erfindung wird durch die Merkmale des Anspruchs 1 gelöst. In vorteilhafter Weise ist das Federelement zwischen dem Deckel und dem Gehäuse in der Weise angeordnet, dass aufgrund der Federkraft des Federelementes der Deckel in einer Schließ- und in einer Offenposition gehalten wird. Das Federelement ist als Blattfeder ausgebildet.

Weitere vorteilhafte Ausbildungen der Erfindung, sind in den abhängigen Ansprüchen angegeben. In vorteilhafter Weise ist das Federelement in der Weise am Deckel befestigt, dass die vom Federelement auf den Deckel ausgeübte Federkraft einen vorgegebenen Hebelarm zu einem Drehpunkt des Deckels aufweist. Dadurch wird in einfacher Weise erreicht, dass der Deckel zwei definierte Stellungen einnehmen kann.

Die Erfindung wird im folgenden anhand der Figuren näher erläutert. Es zeigen:
- Fig. 1: eine schematische Schnittdarstellung eines Wasserkochers,
- Fig. 2: eine Detailansicht der Halterung eines Deckels an dem Gehäuse des Wasserkochers und
- Fig. 3: eine schematische Schnittdarstellung einer Halterung mit einer Blattfeder und

Die Erfindung wird am Beispiel eines Wasserkochers beschrieben, wobei jedoch die Erfindung an jedem Haushaltsgerät einsetzbar ist.

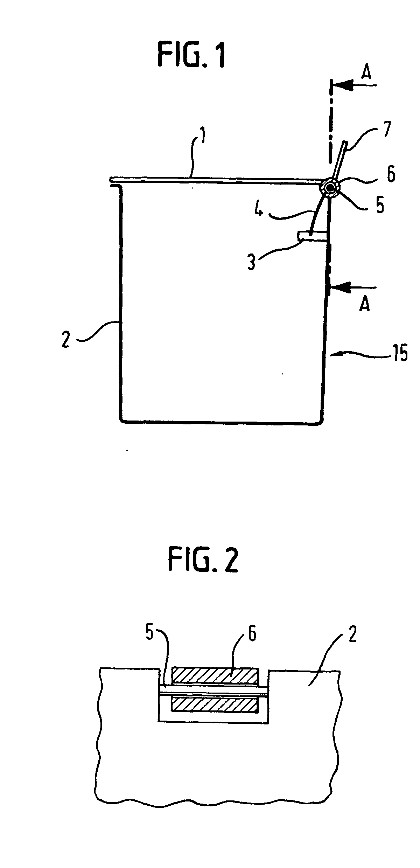

Fig. 1 zeigt in einer schematischen Schnittdarstellung einen Wasserkocher 15, der ein topfförmiges Gehäuse 2 und einen darauf aufgelegten Deckel 1 aufweist. Das topfförmige Gehäuse 2 ist zur Aufnahme von Wasser vorgesehen, wobei das Wasser beim Erhitzen aus Sicherheitsgründen durch den Deckel 1 abgedeckt ist. Der Deckel 1 weist an einem Randbereich eine Lagerbuchse 6 auf, durch deren Innenausnehmung ein Lagerstift 5 geführt ist. An der Lagerbuchse 6 ist ein Hebel 7 angeordnet, der in der Schließposition des Deckels 1, wie in Figur 1 dargestellt, schräg nach oben ragt. Der Hebel 7 weist die Funktion eines Bedienhebels auf, durch dessen Betätigung der Deckel 1 nach oben vom Gehäuse 2 abgehoben wird. Das Gehäuse 2 weist im Bereich der Lagerbuchse 6 auf der Innenseite einen Vorsprung 3 auf, auf dem eine Blattfeder 4 mit einem Ende befestigt ist. Das zweite Ende der Blattfeder 4 ist an der Lagerbuchse 6 befestigt. In anderen Ausführungsformen kann der Vorsprung 3 und die Blattfeder 4 auch außerhalb des Gehäuses 2 angeordnet sein.

Fig. 2 zeigt eine vergrößerte Detailansicht des Schnittes A-A der Figur 1, bei der die Führung des Lagerstiftes 5 durch die Lagerbuchse 6 deutlich zu erkennen ist. Der Lagerstift 5 ist mit beiden Enden mit dem Gehäuse 2 verbunden ist. Der Deckel 1 kann durch eine Betätigung des Hebels 7 um eine Drehachse geschwenkt werden, die durch die Ausrichtung des Lagerstiftes 5 vorgegeben ist.

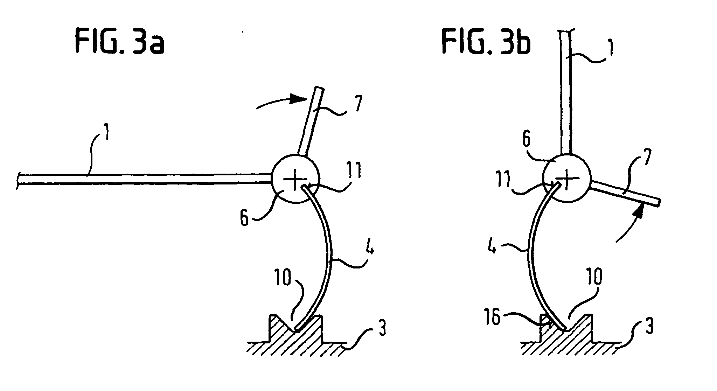

Figur 3a zeigt in einer schematischen Darstellungen den Deckel 1 in einer Schließposition. Die Blattfeder 4 ist mit einem Ende in einen Schlitz 11 der Lagerbuchse 6 eingeschoben und mit dem anderen Ende in einen keilförmigen Aufnahmebereich 10 des Vorsprungs 3 eingelegt. Dabei weist die Blattfeder 4 eine so gewählte Länge auf, dass die Blattfeder 4 nach rechts durchgewölbt ist und dabei den Deckel 1 in der Schließposition festhält, bei der der Deckel 1 auf dem oberen umlaufenden Rand des Gehäuses 2 aufliegt. In der Schließposition des Deckels 1 ist der Schlitz 11 in Bezug auf eine gedachte Verbindungsachse zwischen der Drehachse der Lagerbuchse 6 und dem Aufnahmebereich 10 rechts neben der Verbindungsachse angeordnet, wodurch zwischen der Drehachse und dem Angriffspunkt der Federkraft, die beim Schlitz 11 eingeleitet wird, ein vorgegebener Hebelarm ausgebildet ist. Die Orientierung des Hebelarmes ist in der Weise ausgestaltet, dass die Lagerbuchse 6 ein Drehmoment entgegen dem Uhrzeigersinn und damit in Schließrichtung des Deckels 3 erfährt.

Der Aufnahmebereich 10 weist im Querschnitt eine Keilform mit einem vorgegebenen Öffnungswinkel auf. Durch die Wahl des Öffnungswinkels werden maximale Durchbiegestellungen der Blattfeder 4 vorgegeben.

Soll nun der Deckel 1 geöffnet werden, dann wird durch einen Druck auf den Hebel 7 der Deckel 1 gegen das Drehmoment der Blattfeder 4 um die Drehachse gedreht, bis die Blattfeder 4 in eine zweite Biegeform umspringt, wie in Figur 3b dargestellt ist.

Fig. 3b zeigt die Anordnung der Figur 3a im aufgeklappten Zustand, bei dem der Deckel 1 nach oben geklappt ist. In der aufgeklappten Stellung ist die Blattfeder 4 in eine zweite Lage umgesprungen, bei der die Lagerbuchse 6 mit einem Drehmoment beaufschlagt wird, das in der Drehrichtung auf die Lagerbuchse 6 wirkt, die ein Öffnen des Deckels 1 erzeugt. In der Offenposition des Deckels 1 liegt die Blattfeder 4 auf einer Anlagefläche 16 des Aufnahmebereichs 10 an. Durch die Winkelstellung der Anlagefläche 16 wird die maximale Durchbiegung der Blattfeder 4 festgelegt.

Soll nun der Deckel 1 wieder geschlossen werden, so wird über den Hebel 7 der Deckel 1 so weit geschwenkt, bis die Blattfeder 4 wieder in ihre Ausgangsposition umspringt und dabei den Deckel 1 in die Schließposition vorspannt, wie in Fig. 3a dargestellt ist.

Die Erfindung beschreibt somit ein Haushaltsgerät mit einem Öffnungs- und Schließsystem mit einer Blattfeder, bei der aufgrund der Anordnung und Vorspannung der Blattfeder zwei vorgegebene Lagen, eine Schließposition und eine Offenposition des Deckels 1 durch die Blattfeder mit einer entsprechenden Vorspannkraft unterstützt wird. Somit wird der Deckel 1 sowohl in der Schließposition als auch in der Offenposition allein durch die Federkraft der Blattfeder gehalten. Es sind somit keine zusätzlichen mechanischen Schieber notwendig, die den Deckel in der Offen- oder Schließposition festhalten.

## Patentansprüche

1. Haushaltsgerät mit einem bewegbaren Deckel, insbesondere Wasserkocher, mit einem Gehäuse (2), mit einer Drehhalterung (5, 6), über die der Deckel drehbar um eine Drehachse an dem Gehäuse (2) gelagert ist, und mit einem Federelement (4), das zwischen Gehäuse und Deckel eingespannt ist und den Deckel (1) in einer vorgegebenen Lage vorspannt, wobei das Federelement (4) an einem Befestigungspunkt (11, 17) am Deckel (1) befestigt ist, der Befestigungspunkt (11, 17) in der Weise angeordnet ist, dass das Federelement (4) in einer Schließposition des Deckels ein Drehmoment auf den Deckel (1) ausübt, mit dem der Deckel (1) in der Schließposition gehalten wird, und beim Bewegen des Deckels (1) in eine Offenposition der Befestigungspunkt (11, 17) seine Lage in der Weise verändert, dass das Federelement (4) in der Offenposition des Deckels (1) ein Drehmoment auf den Deckel (1) in der Weise ausübt, dass der Deckel (1) in der Offenposition gehalten wird,
**dadurch gekennzeichnet, daß**
das Federelement als Blattfeder (4) ausgebildet ist und die Offenposition und die Schließposition des Deckels (1) durch zwei entgegengesetzte Biegeformen der Blattfeder (4) festgelegt sind.

2. Haushaltsgerät nach Anspruch 1, **dadurch gekennzeichnet, dass** die Drehhalterung eine Lagerbuchse (6) und einen Lagerstift (5) aufweist, die Lagerbuchse (6) am Deckel (1) ausgebildet ist, der Lagerstift (5) mit dem Gehäuse (2) verbunden ist und die Blattfeder (4) an der Lagerbuchse (6) und am Gehäuse (2) eingespannt ist.

## Claims

1. Domestic appliance with a movable lid, particularly a kettle, comprising a housing (2), a rotary mount (5, 6) by way of which the lid is mounted at the housing (2) to be rotatable about an axis of rotation, and a spring element (4) restrained between housing and lid and biassing the lid (1) into a predetermined position, wherein the spring element (4) is fastened to the lid (1) at a fastening point (11, 17) which is arranged in such a manner that the spring element (4) in a closed position of the lid exerts on the lid (1) a rotational moment by which the lid (1) is kept in the closed position and on movement of the lid (1) into an open position the fastening point (11, 17) changes its position in such a manner that the spring element (4) in the open position of the lid (1) exerts on the lid (1) a rotational moment in such manner that the lid (1) is kept in the open position, **characterised in that** the spring element is constructed as a leaf spring (4) and the open position and closed position of the lid (1) are fixed by two oppositely bent shapes of the leaf spring (4).

2. Domestic appliance according to claim 1, **characterised in that** the rotary mount comprises a bearing bush (6) and a bearing pin (5), the bearing bush (6) is formed at the lid (1), the bearing pin (5) is connected with the housing (2) and the leaf spring (4) is restrained at the bearing bush (6) and at the housing (2).

## Revendications

1. Appareil ménager doté d'un couvercle mobile, en particulier bouilloire à eau, qui présente un caisson (2) doté d'un support rotatif (5, 6) par l'intermédiaire duquel le couvercle est monté sur le caisson (2) à rotation autour d'un axe de rotation, et un élément élastique (4) qui est serré entre le caisson et le couvercle et qui précontraint le couvercle (1) dans une position prédéterminée, l'élément élastique (4) étant fixé sur le couvercle (1) en un point de fixation (11, 17), le point de fixation (11, 17) étant disposé de telle sorte que lorsque le couvercle est en position de fermeture, l'élément élastique (4) exerce sur le couvercle (1) un couple de rotation par lequel le couvercle (1) est maintenu dans la position de fermeture et que lorsque le couvercle (1) est déplacé dans une position d'ouverture, la position du point de fixation (11, 17) est modifiée de telle sorte que lorsque le couvercle (1) est en position d'ouverture, l'élément élastique (4) exerce sur le couvercle (1) un couple de rotation qui maintient le couvercle (1) dans la position d'ouverture,
**caractérisé en ce que**
l'élément élastique est configuré comme lame de ressort (4) et **en ce que** la position d'ouverture et la position de fermeture du couvercle (1) sont définies par deux formes arquées, opposées l'une à l'autre, de la lame de ressort (4).

2. Appareil ménager selon la revendication 1, **caractérisé en ce que** le support de rotation présente une douille de montage (6) et une tige de montage (5), la douille de montage (6) étant réalisée sur le couvercle (1), la tige de montage (5) étant reliée au caisson (2) et la lame de ressort (4) étant serrée sur la douille de montage (6) et sur le caisson (2).
